# EUROPEAN PATENT APPLICATION

(11) **EP 3 889 713 A1**
(43) Date of publication of application: **06.10.2021**
(21) Application number: 20167792.9
(22) Date of filing: 02.04.2020
(51) Int. Cl.: G05B 19/418

(54) **GENERATING A MULTI-HIERARCHICAL REPRESENTATION OF A TECHNICAL ARRANGEMENT**

(71) Applicant: Siemens Aktiengesellschaft, 80333 München (DE)
(72) Inventor: The designation of the inventor has not yet been filed

(57) **Abstract**

The invention relates to a computer-implemented method being performed by at least one processing unit (CPU) for generating a multi-hierarchical representation (HRS) of a technical main object (TMO) electronically stored in at least one data storage (DST). To improve engineering the method comprises:
providing an engineering system (EGS) comprising at least two engineering discipline modules (ED1-ED99), a first engineering discipline module (ED1) and a second engineering discipline module (ED2),
said engineering discipline modules (ED1-99) comprising templates (TP1-99),
said templates (TP1-99) respectively representing a technical object (TCO) belonging to said technical main object (TMO),
said templates (TP1-99) defining technical features (FTR) within said engineering discipline module (ED1-99) relating to said engineering discipline respectively,
wherein at least one of said templates (TP1-99) of said second engineering discipline module (ED2) is a variant-template (VTP) having at least two variants (VOX) being set by a variant-parameter (VPR),
determining a first variant-parameter (VP1) within said first engineering discipline module (ED1),
monitoring said first variant-parameter (VP1),
extracting said first variant-parameter (VP1) from said first template (TP1),
receiving said first variant-parameter (VP1) by said variant-template (VTP) of said second engineering discipline module (ED2),
setting said variant-template (VTP) to a first variant (VO1) according to received first variant-parameter (VP1).

## Description

### Technical field

The invention relates to an automated engineering system enabling a more efficient approach to designing complex technical arrangements like plants, for example for energy generation or postal logistics.

### Background

Designing of large complex systems - system engineering or plant engineering - conventionally requires a multidisciplinary team of experts. The different engineering discipline modules need to communicate about the mutual technical requirements continuously. Conventionally this communication is done by bilateral or multilateral meetings for presentation of the project status in the respective discipline in order to align the respective engineering discipline modules to each other and into the direction of the project objective. The organization of this communication and alignment may be considered as project management. Project management requires an experienced engineer with advanced communicative and organizational skills being familiar with all involved engineering discipline.

Aspects of an advanced computer implemented engineering project management are disclosed in PCT/EP2018/079146. This patent application deals with establishing connections between elements of a hierarchical structure of engineering objects to exchange data.

### Summary

Proven engineering solutions may be kept for re-use as templates. Such templates consist of objects and schematics in hierarchies, all with properties, ports, connections, and values. The hierarchically structured objects and schematics, provided with properties, ports, connections, and values represent the technical solution in the engineering system, often termed as a technical specification.

Upon changes of the design in the input discipline the receiving disciplines need to change their design respectively their selection and application of variants, and value sets - to fit to the new situation.

Conventionally the engineer reads the values of the input engineering discipline which determine the correct application of a variant and the value set and changes the design by manually editing or selecting or switching said variant and values set manually by an explicit action.

This is time consuming and prone to mistakes.

It is therefore an objective of the present invention to improve the engineering process, reduce time consumption and errors.

According to a first aspect of the invention a computer-implemented method being performed by at least one processing unit for generating a multi-hierarchical representation of a technical main object electronically stored in at least one data storage, the method comprising:
providing an engineering system comprising at least two engineering discipline modules, a first engineering discipline module and a second engineering discipline module,
said engineering discipline modules comprising templates,
said templates respectively representing a technical object belonging to said technical main object,
wherein at least one of said templates of said second engineering discipline module is a variant-template having at least two variants being set by a variant-parameter,
determining a first variant-parameter within said first engineering discipline module,
monitoring said first variant-parameter,
extracting said first variant-parameter from said first template,
receiving said first variant-parameter by said variant-template of said second engineering discipline module,
setting said variant-template to a first variant according to received first variant-parameter.

According to a second aspect of the invention a non-transitory computer-readable storage medium stores instructions of an engineering system executable by one or more processors for generating a multi-hierarchical representation of a technical main object electronically stored in at least one data storage, the instructions comprising:
defining at least two engineering discipline modules (ED1-ED99), a first engineering discipline module and a second engineering discipline module,
defining templates of said engineering discipline modules, said templates respectively representing a technical object belonging to said technical main object, wherein at least one of said templates of said second engineering discipline module is a variant-template having at least two variants being set by a variant-parameter,
determining a first variant-parameter within said first engineering discipline module,
monitoring said first variant-parameter,
extracting said first variant-parameter from said first template,
receiving said first variant-parameter by said variant-template of said second engineering discipline module,
setting said variant-template to a first variant according to received first variant-parameter,
storing, by said data storage in communication with the processor, said variant-template being set to a first variant.

A template according to the invention in an engineering system is used to create technical specifications or technical specification parts. It represents a framework that defines parts of the content or layout of the technical specification. By inserting the missing parts, the template is completed to a complete specification. A template in a multi-disciplinary engineering system provides a scope for engineering data that may be prepared for re-use in a different engineering context (e.g., an engineering project for a baggage handling system). The different engineering discipline modules may contribute data with respect to corresponding domain needs. Templates within a multi-disciplinary engineering system provide that engineering objects may be grouped as a template in a discipline and linked with corresponding data in other applications and/or disciplines.

Such templates may have options and/or variants - hereinafter simply put variants - which address variations in the way a template applies to a specific technical engineering situation. These variants may relate to different technical object variants. Such templates are termed as variant-templates hereinafter.

Also, the template can have different sets of values to fit different engineering situations. A situation is described by properties and values in a different engineering discipline module (input discipline}, i.e. mechanical design to electrical engineering.

E.g. a type of conveyor typically gets additional sensors and schematics when a specific length is exceeded, and/or the design values for motor power, rated current of fuses, cable diameters will change to a different set of values fitting to the now more demanding requirements.

In the engineering system according to the invention the conveyor may be modeled as a template, the additional sensor and schematics may be objects of a variant of the template and different sets of values represent a 'short' and 'long' conveyor. Upon first use of the template the correct variant may be selected. Alternatively, a default setting may be applied as a starting value. Each time the limit length is exceeded or falls below the chosen variant the respective value set may be changed.

Preferred embodiments are subject of the dependent claims.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments dis-closed as a basis for modifying or designing other structures for carrying out the same purposes of the present disclosure. Those skilled in the art will also realize that such equivalent constructions do not depart from the spirit and scope of the disclosure in its broadest form.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### Brief description of the drawings

- Fig. 1: illustrates a diagram of an example of a computer implemented method for generating the multi-hierarchical representation according to the invention,
- Fig. 2: illustrates schematically a computer network to perform the method according to the invention,
- Fig. 3: illustrates schematically simplified relations between a technical main object to be build and an engineering system,
- Fig. 4: illustrates schematically simplified an iteration according to the computer implemented method for generating the multi-hierarchical representation according to the invention,

Groups of reference signs might be referred to by e.g. `XY1-99' meaning that reference sign with prefix 'XY' refers to several objects each comprising an individual number indicated by a numerical index, referred to as '1-999', wherein '1-999' isn't limiting to an upper limit of 999 or to a lower limit of 1 or 111 but is respectively a placeholder for a plurality of any magnitude.

Identical references may refer to different objects of the same type or the same function.

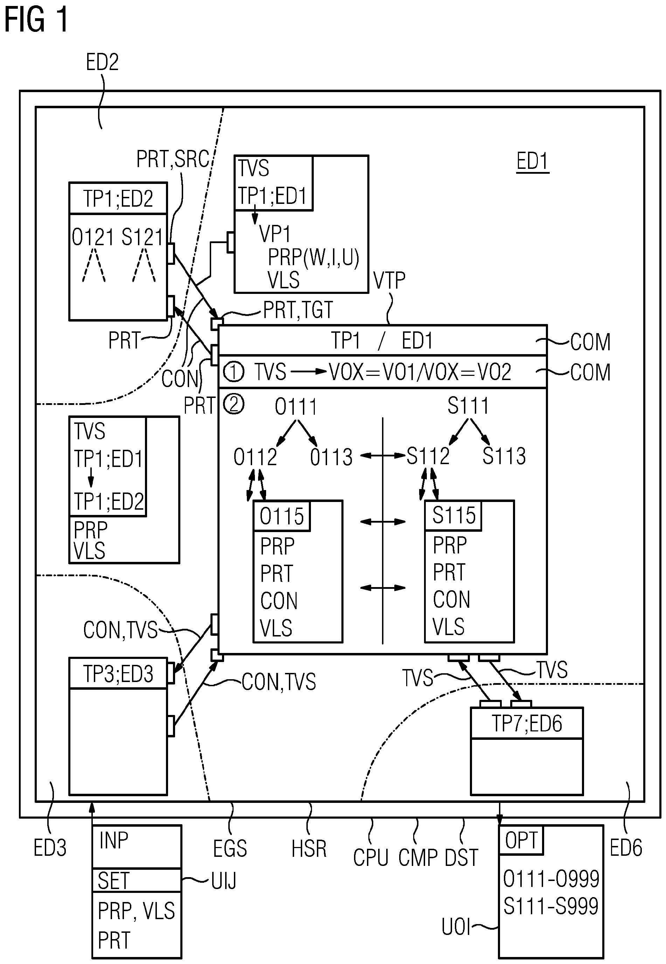

Figure 1 shows schematically the computer implemented method being performed by at least one processing unit CPU.

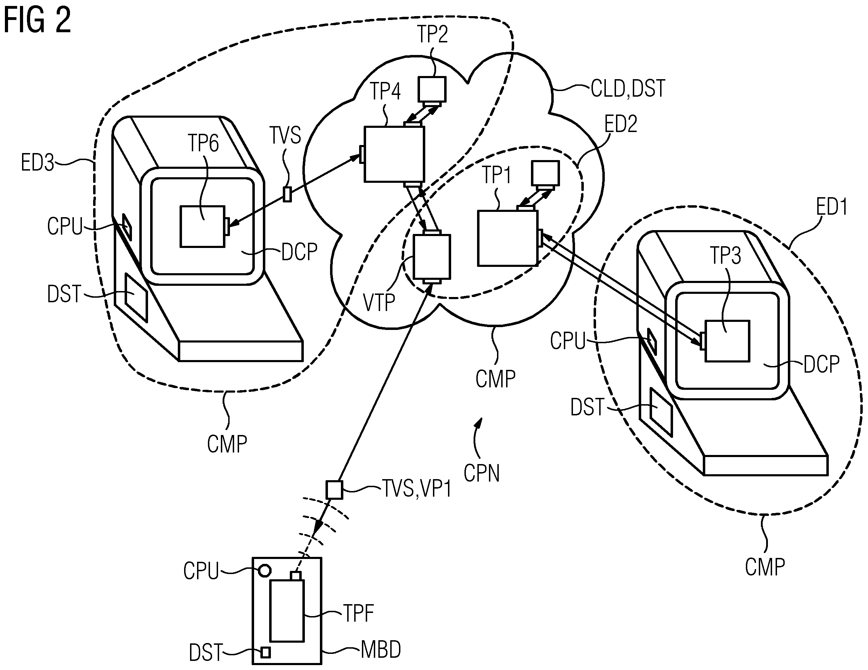

According to a first aspect of the invention the processing unit CPU may be a single desktop computer CMP or workstation for the processing unit CPU which may be represented by several computers respectively or a network of computers maybe including a cloud server. These circumstances are illustrated schematically in figure 2.

The processing unit CPU - respectively several of these - may belong to respectively one or several computers CMP which may also comprise or may be connected to a data storage DST. This structure is illustrated simplified in figure 1 as a single line-frame encircling another line frame representing a software module or several of these modules representing an engineering system EGS. Said engineering system EGS generates a multi-hierarchical representation HRS of the technical main object TMO which is electronically stored in said at least one data storage DST.

Said engineering system EGS may comprise several engineering discipline modules e.g. ED1-ED99, the first engineering discipline module ED1, the second engineering discipline module ED2 and further engineering discipline modules ED3,..., ED6, ..., ED99.

Said engineering discipline modules ED1 - ED99 comprising templates TP1 - TP99. These templates TP1 - TP99 may be used to create technical specifications or parts of technical specifications. Said templates TP1 - TP99 represent the framework that defines parts of the content or layout of the technical specification and by inserting missing parts said templates may be completed to complete specifications. One benefit of such templates TP1 - TP99 is the possibility to re-use it in different engineering context. For example, a template for an electric motor may be used as a drive for a conveyor belt or as an engine of an electric car. According to the invention templates within a multidisciplinary engineering system may be used for grouping engineering objects in a specific discipline and may be linked with corresponding data in other applications respectively other disciplines of the engineering system EGS.

Said templates TP1 - TP99 may respectively represent a technical object TCO belonging to said technical main object TMO.

Said templates TP1 - TP99 respectively may comprise a multi-hierarchical structure of objects O111 - O999 and/or technical schematics S111 - S999. Each template TP1 - TP99 may belong to a specific engineering discipline module ED1 - ED99. Said templates may comprise ports PRT, properties PRP, connections CON, values VLS. By means of said ports PRT said templates TP1 - TP99 may be connected to each other by connections CON. These connections CON represent respectively data transfer from one template TP1 - TP99 to another template TP1 - TP99. This data transfer comprises the transmission of template value sets TVS which contain data being retrieved from said first template TP1 to another template TP2.

Some of said templates TP1 - TP99 may be provided as variant - templates VTP having at least two variants VOX being set by a variant parameter VPR. Said template value sets TVS may be retrieved from the first template TP1 and received by said second template TP2 which may be a variant template VTP containing at least one variant parameter VP1 setting said variant template VTP to a first variant VO1 according to the received first variant parameter VP1.

One essential feature of the engineering system EGS according to the invention lies in permanently monitoring said first variant parameter VP1 to enable immediate change of the template variant VOX according to the template variant parameter VP1.

According to another aspect of the invention said variant template VTP of said second engineering discipline module ED2 may have mutually exclusive variants V01, V02, ..., VOX respectively being set by said variant-parameter VP1-VP99.

According to another aspect of the invention the monitoring of said first variant parameter VP1 may initiate an extraction of said variant parameter VP1 and receiving of said variant-parameter VP1 by said variant-template VTP may only be performed in case of a change of said variant-parameter.

According to still another aspect of the invention at least one variant parameter VP1 may include a control voltage, a power supplier, a manufacturer, a power rating, a power frequency, a power loss or any combination thereof. Said technical object TCO may be one of a motor, a drive, a sensor, a checking line or a conveyor.

According to still another aspect of the invention a technical main object TMO may be built according to the specifications of the multi-hierarchical representation of the technical main object TMO generated by the engineering system EGS. The production of technical main objects TMO may be accelerated due to accelerated generation of the multi-hierarchical representation HSR of the technical main object TMO due to fast and error-free data transfer between the several engineering discipline modules ED1-ED99 being provided by the engineering system EGS. A permanent monitoring of variant parameters VPR exceeding the limits of the respective engineering discipline module ED1-ED99 may enable real-time updating of templates TP1-TP99 in particular regarding templates variants VOX.

The engineering system EGS receives an input INP which may comprise initial settings SET which may be groups of properties PRP, values VLS and parts PRT which can all be summarized as input parameters UIJ.

The engineering system generates an output OPT comprising output parameters, values, objects, schemes being grouped and summarized in output objects UOI comprising objects 0111-0999 and schemes S111-S999.

Figure 2 shows another aspect of the invention by illustrating a typical computer system CMP used to execute the method according to the invention. The computer system CMP may be provided as a distributed system being part of a computer network CPN. Some desktop computers DCP, each may be provided with data storage DST and processing units CPU are cooperating with a cloud CLD device with own data storage DST and own calculation device. Mobile devices MBD may be elements of this computer network CPN and operate templates with its own processing unit CPU store template values in a data storage DST and communicate with other templates TP1-TP99 across engineering discipline ED1-ED99 limits by transferring template value sets TVS which may contain variant parameters VP1-VP99 changing variants of variant-templates VTP. Engineering disciplines ED1, ED2, ED3 are defined across elements (DCP, CLD, MBD) of this computer network CPN or may be limited to one single device. Within these engineering disciplines ED1 - ED99 several templates TP1 - TP7 may be provided to determine, generate and store data, values, parameters describing features of technical objects TCO of the technical main object TMO. These templates TP1 - TP7 may exchange data as illustrated in Fig. 1.

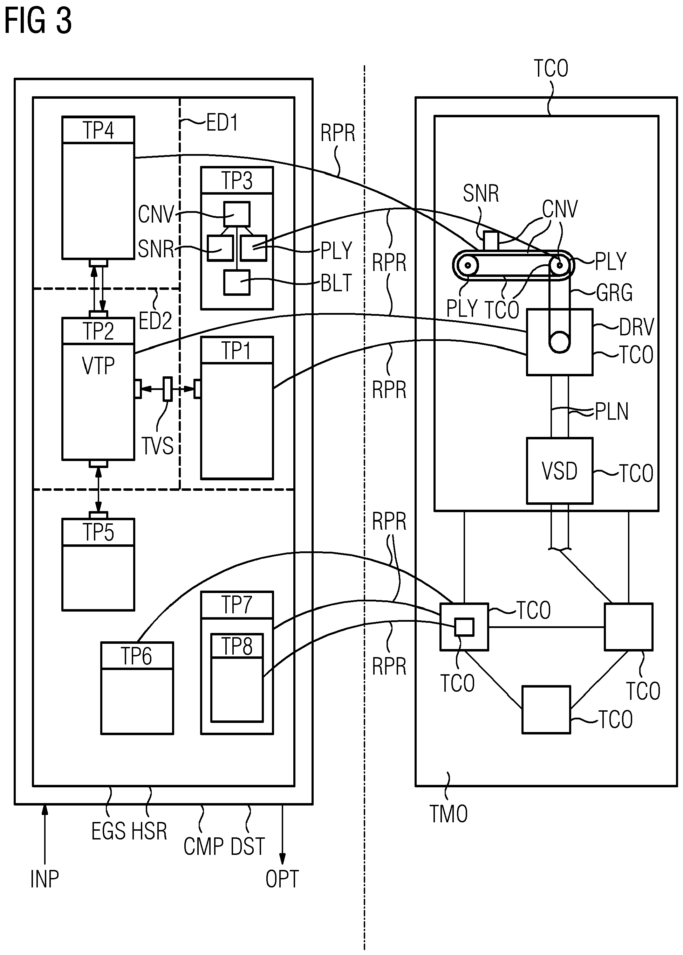

Figure 3 shows schematically and simplified relations RPR between the computer-implemented method according to the invention and a technical main object TMO. The left side of this illustration basically shows aspects of the engineering system EGS as illustrated in more detail in figure 1. On the right side said technical main object TMO is shown simplified schematically comprising several technical objects TCO, which may be related respectively to at least one template TP1 - TP8 in the engineering system EGS. These relations RPR are illustrated as connecting lines.

According to another aspect of the invention each template of the engineering system EGS may belong to exact one engineering disciplines ED1 - ED99, respectively.
According to another aspect of the invention one technical object TCO is related to at least one template TP1 - TP8 - in figure 3 illustrated by relations RPR. One technical object TCO may have relations RPR to several templates TP1 - TP99 which may be assigned to different engineering discipline modules ED1-ED99. Figure 3 shows - on the right side - one technical object TCO in more detail. The technical object TCO relates to a motor driven conveyor CNV comprising sensors SNR and one driven guide roller PLY and a guide roller PLY without driving. The driven guide roller PLY receives driving power by a transmission GRG from the motor DRV. The motor DRV is connected via powerline PLN to a variable frequency drive VSD which is provided with electrical power and control instructions in a not further illustrated way. All these elements defined may be technical objects TCO on its own being part of the overall technical objects TCO which is part of the technical main object TMO. This real technical object illustrated schematically and simplified in figure 3 reflects the hierarchical structure which may be implemented in the engineering system EGS. For example, the motor DRV of this technical main object TMO may require mechanical engineering, automation, electrical engineering and maybe some contribution of additional engineering disciplines ED1 - ED99. This is illustrated by relations RPR reaching from the motor DRV to two different templates TP1, TP2, one of these may be a variant template VTP. These different templates TP1, TP2 may belong to different engineering disciplines ED1, ED2. In this example template TP2 is provided as a variant template VTP wherein the variant depends on values of template TP1 to and automatically changes when monitoring of this value reveals any change or least a significant change so that the value received as part of a transfer value set TVS by templates TP2 changes template TP2 to a different variant.

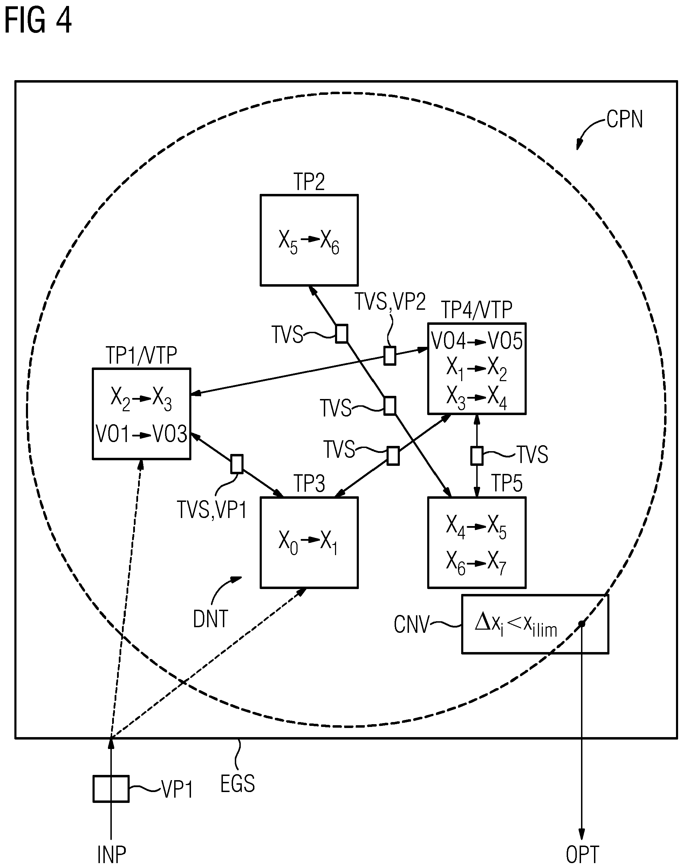

Figure 4 shows another aspect of the invention by illustrating an iteration how it may be performed using the method according to the invention. The simplified depiction schematically shows the computer implemented engineering system EGS receiving an input INP. The input INP reaches two different templates TP3, TP1/VTP respectively belonging to respectively different engineering disciplines ED1, ED2. As a reaction to the input INP template TP3 changes value XO to value X1. Template TP1, which is a variant template VTP changes value X2 to X3 leading to a variant change of template TP1, which is a variant template VTP. Caused by this input the value XO changes to X1 in template TP3 and the value X1 is transferred to template TP4, which is a variant template VTP. The variant of template TP4 is changed [X1 to X2] and in addition value X3 is changed to X4. The change of the value in templates TP4 from X3 to X4 this value change is received by templates TP5. Templates TP5 reacts by changing value X4 to X5, which changes is monitored and sent to template TP2. Template TP2 amends value X5 to X6. This value change is monitored by templates TP5 receiving this information and changing value X6 to X7. This network of value change, exchange, monitoring, determining new values, updating values may be continued till - according to another aspect of the invention - a convergence criterion is met. This may be determined by the convergence module CNV which is monitoring the respective value changes over time and stop the iteration in case the respective change Δxi of the values over time respectively step by step reach a lower limit Δxilim.

In general said values X0-X7 are given as examples, only. These values X0-X7 may have a starting default setting and get their final value by convergence of said iteration. These values X0-X7 may be value sets, like vectors, matrices, or others.

## Claims

1. Computer-implemented method being performed by at least one processing unit (CPU) for generating a multi-hierarchical representation (HRS) of a technical main object (TMO) electronically stored in at least one data storage (DST), the method comprising:
providing an engineering system (EGS) comprising at least two engineering discipline modules (ED1-ED99), a first engineering discipline module (ED1) and a second engineering discipline module (ED2),
said engineering discipline modules (ED1-99) comprising templates (TP1-99),
said templates (TP1-99) respectively representing a technical object (TCO) belonging to said technical main object (TMO),
said templates (TP1-99) defining technical features (FTR) within said engineering discipline module (ED1-99) relating to said engineering discipline respectively,
wherein at least one of said templates (TP1-99) of said second engineering discipline module (ED2) is a variant-template (VTP) having at least two variants (VOX) being set by a variant-parameter (VPR),
determining a first variant-parameter (VP1) within said first engineering discipline module (ED1),
monitoring said first variant-parameter (VP1),
extracting said first variant-parameter (VP1) from said first template (TP1),
receiving said first variant-parameter (VP1) by said variant-template (VTP) of said second engineering discipline module (ED2),
setting said variant-template (VTP) to a first variant (VO1) according to received first variant-parameter (VP1).

2. Computer-implemented method according to claim 1, wherein said (VP1) of said second engineering discipline module (ED2) has mutually exclusive variants (VOX) respectively being set by said variant-parameter (VP1-VP99).

3. Computer-implemented method according to claim 2, wherein said monitoring of said first variant-parameter (VP1) initiates an extraction of said first variant-parameter (VP1) and receiving of said first variant-parameter (VP1) by said variant-template (VTP) only in case of a change of said first variant-parameter (VP1).

4. Computer-implemented method according to at least one of claims 1-3, wherein the one or more variant-parameter (VP1-VP99) to be extracted includes a control voltage, a power, a supplier, a manufacturer, a power rating, a power frequency, a power loss, or any combination thereof.

5. Computer-implemented method according to at least one of claims 1-4, wherein said technical object (TCO) is one of a motor (DRV), a drive, a sensor, a checking line, a conveyor (CNV).

6. Computer-implemented method according to at least one of claims 1-5, wherein providing several of said templates (TP1-99) with an extraction port (PRT), said ports (PRT) connecting individual templates (TP1-TP99) among each other, such that values are extracted by said extraction port (PRT) and received by a receiving template (TP1-99).

7. Computer-implemented method according to at least one of claims 1-6, wherein said templates (TP1-TP99) comprising objects and/or schemes, said objects and/or schemes comprising properties and/or ports and/or connections and/or values.

8. Computer-implemented method according to at least one of claims 1-7, wherein said templates (TP1-TP99) comprising values, wherein at least some of said values are elements of a dependency-network (DNT), wherein these values dependent on other values and said other values dependent on other values, wherein said dependency-network (DNT) reaches across limits of respective templates (TP1-99).

9. Computer-implemented method according to at least claim 8, wherein said dependency-network (DNT) reaches across limits of respective engineering discipline modules (ED1-ED99) .

10. Computer-implemented method according to at least one of claims 1-9, wherein a respective starting value is assigned to values of templates (TP1-TP99), wherein said engineering system (EGS) starts an iteration initiated by a change of at least one value in said template (TP1-TP99), wherein said template (TP1-TP99) belongs to said dependency-network (DNT), wherein said templates (TP1-TP99) determine dependent values and transfer values across template limits and across engineering discipline module limits iteratively as long as a convergence criterium for the changing values is met.

11. In a non-transitory computer-readable storage medium storing instructions of an engineering system (EGS) executable by one or more processors for generating a multi-hierarchical representation (HRS) of a technical main object (TMO) electronically stored in at least one data storage (DST), the instructions defined by a method according to at least one of the claims 1-10.

12. Computer program product directly loadable into the internal memory of a digital computer, comprising software code portions for performing the methods of one of the claims 1 to 10 when said computer program product is run on a computer (CMP).

13. Method comprising building a technical main object (TMO) being build according to said multi-hierarchical representation (HRS) of said technical main object (TMO), electronically stored in at least one data storage (DST), wherein said multi-hierarchical representation (HRS) is generated by a method according to claims 1 to 10.

14. Technical main object (TMO) being build according to said multi-hierarchical representation (HRS) of said technical main object (TMO), electronically stored in at least one data storage (DST), wherein said multi-hierarchical representation (HRS) is generated by a method according to claims 1 to 10.
